# Europäisches Patentamt
# European Patent Office
# Office européen des brevets

(19)

(11) Publication number : **0 360 774 B1**

(12)

# EUROPEAN PATENT SPECIFICATION

(45) Date of publication of patent specification :
02.12.92 Bulletin 92/49

(51) Int. Cl.⁵ : **B23B 27/14,** B23B 27/22, B23C 5/20

(21) Application number : **89850305.7**

(22) Date of filing : **18.09.89**

(54) Cutting insert for chip forming machining.

(30) Priority : **22.09.88 SE 8803354**

(43) Date of publication of application :
**28.03.90 Bulletin 90/13**

(45) Publication of the grant of the patent :
**02.12.92 Bulletin 92/49**

(84) Designated Contracting States :
**AT BE CH DE ES FR GB IT LI LU NL SE**

(56) References cited :
**EP-A- 0 208 668
DE-A- 2 840 610
DE-A- 2 845 211
US-A- 4 335 984**

(73) Proprietor : **SANDVIK AKTIEBOLAG
S-811 81 Sandviken 1 (SE)**

(72) Inventor : **Pettersson, Lars Ture
112 Forest Road
Glen Rock, N.J. 07452 (US)**
Inventor : **Wiman, Jörgen Viggo
Kurrasbacken 11
S-811 52 Sandviken (SE)**

(74) Representative : **Taquist, Lennart et al
AB Sandvik Central Service Patents &
Licences
S-811 81 Sandviken (SE)**

EP 0 360 774 B1

Jouve, 18, rue Saint-Denis, 75001 PARIS

# Description

The present invention relates to a cutting insert for chip forming machining consisting of a body having polygonal basic shape and having at least one cutting edge created by the transition between an upper face and a side surface of the insert, said upper face constituting a rake face or contact face between the cutting insert and the chip formed during machining, said rake face comprises a chip former located inside or connected directly to the cutting edge. This chip former includes a plurality of ridges.

There have been proposed several prior art inserts having chip formers that consist of a plurality of ridges. One of these prior inserts, see DE-A-2 845 211, is provided with a chip former which includes recesses located adjacent each other in the rake face. These recesses intersect with each other and thereby provide ridges along their intersections which extend perpendicularly in relation to the adjacent cutting edge. These ridges are arranged with mutually decreasing distances in the direction from the middle of an adjacent cutting edge towards the corner of said insert. The contact area between the chip and the ridges towards the corner is thereby increased and the chip therefore has a tendency to approach the workpiece during turning such that no risk of damage occurs.

It is an object of the present invention to provide a cutting insert which urges the chip away from the workpiece during a working operation.

It is another object of the present invention to provide a cutting insert having a plurality of cutting edges.

These and other objects of the invention are achieved by virtue of those specific features that are outlined in the accompanying patent claims.

The invention is described in more detail in the following with reference to the appending drawings disclosing different embodiments of the invention by way of example.

Fig. 1 shows a top view of an embodiment of a cutting insert according to the invention.

Fig. 2 shows a side view of the insert of Fig. 1 and an enlarged view of a section of the insert.

Figs. 3 to 7 show cross-sections along the lines III-III to VII-VII, respectively.

Fig. 8 shows an elarged top view of a section of the insert.

Fig. 9 shows the insert in engagement with a workpiece.

Fig. 10 shows in top view a section of an alternative embodiment of a cutting insert of the invention.

Fig. 11 shows a cross-section along the line XI-XI in Fig. 10.

Fig. 12 shows in top view a portion of a further alternative embodiment of a cutting insert of the invention, and

Fig. 13 shows a cross-section along the line XIII-XIII in Fig. 12.

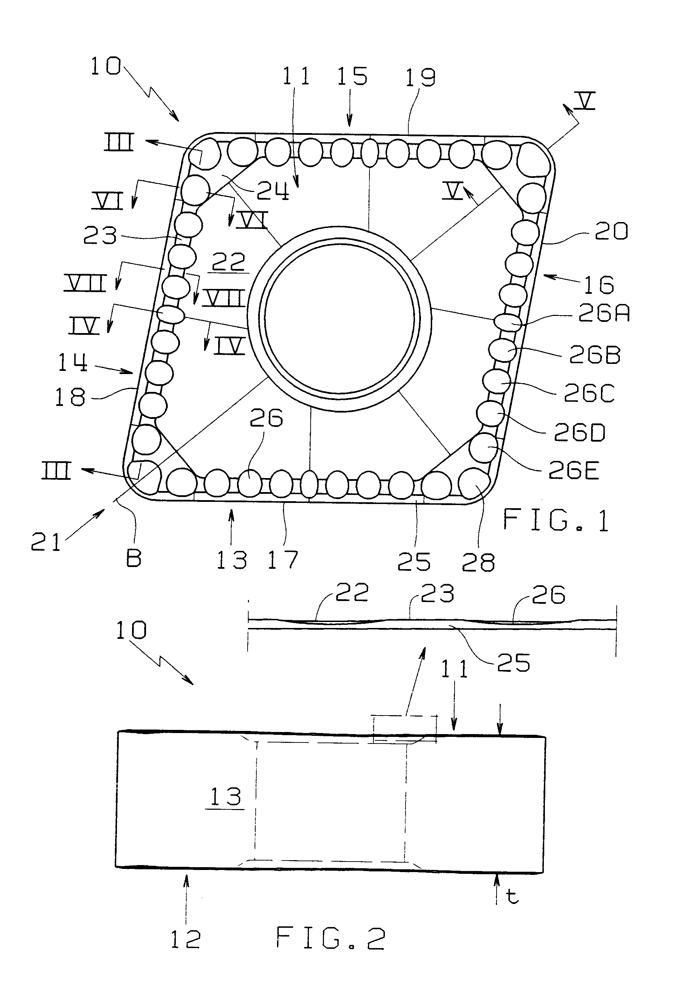

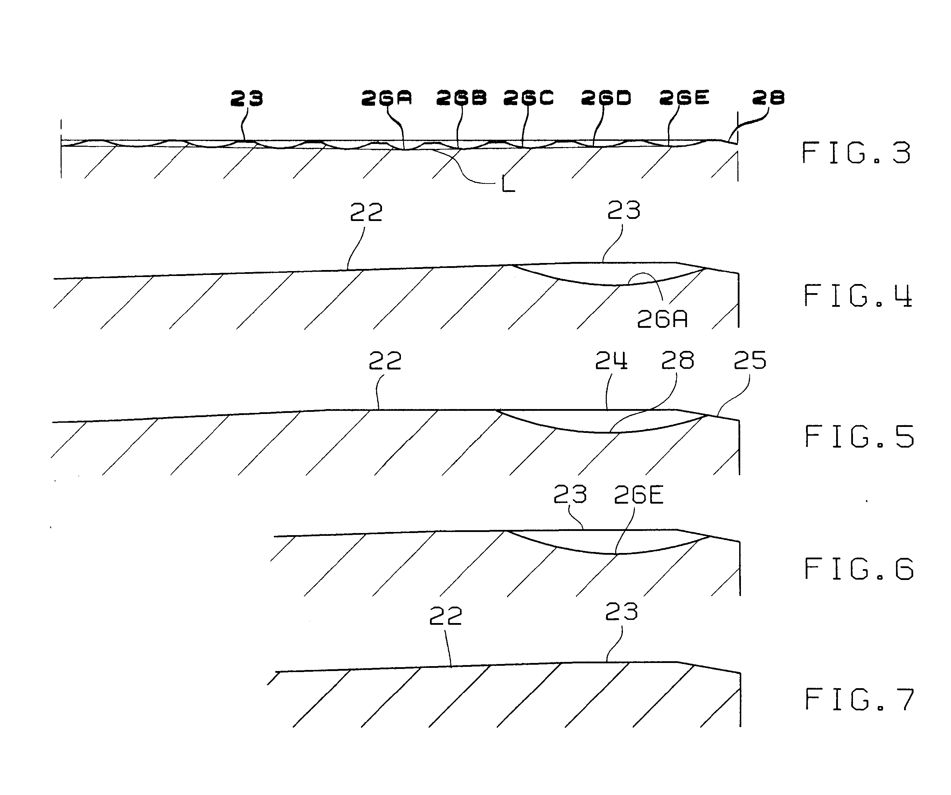

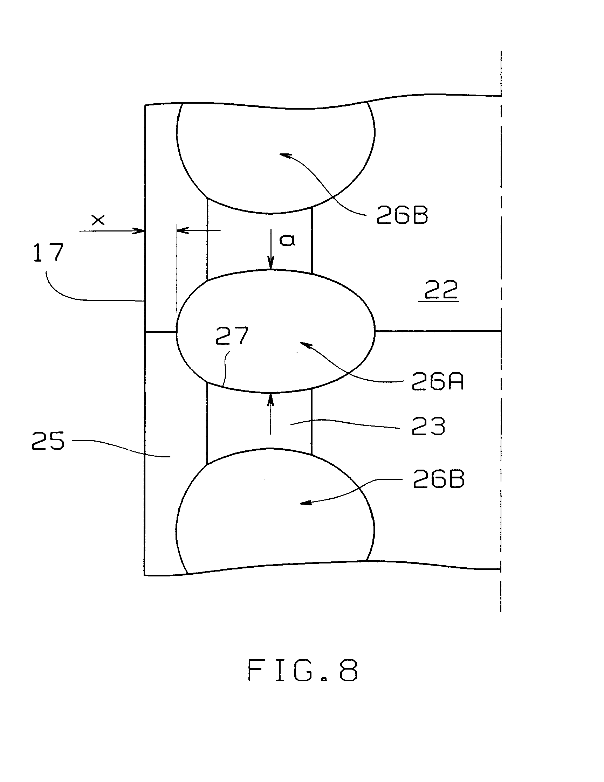

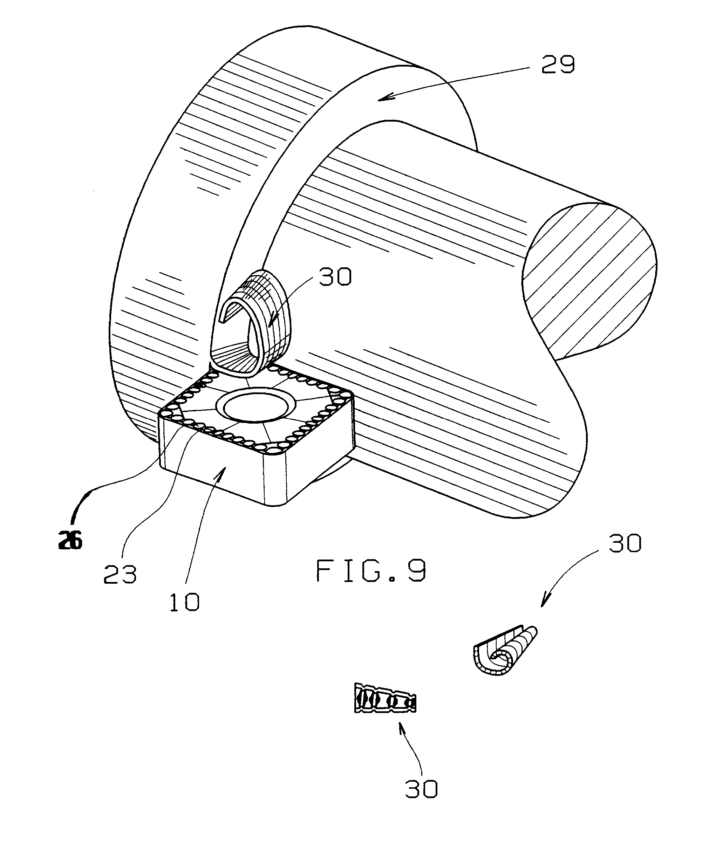

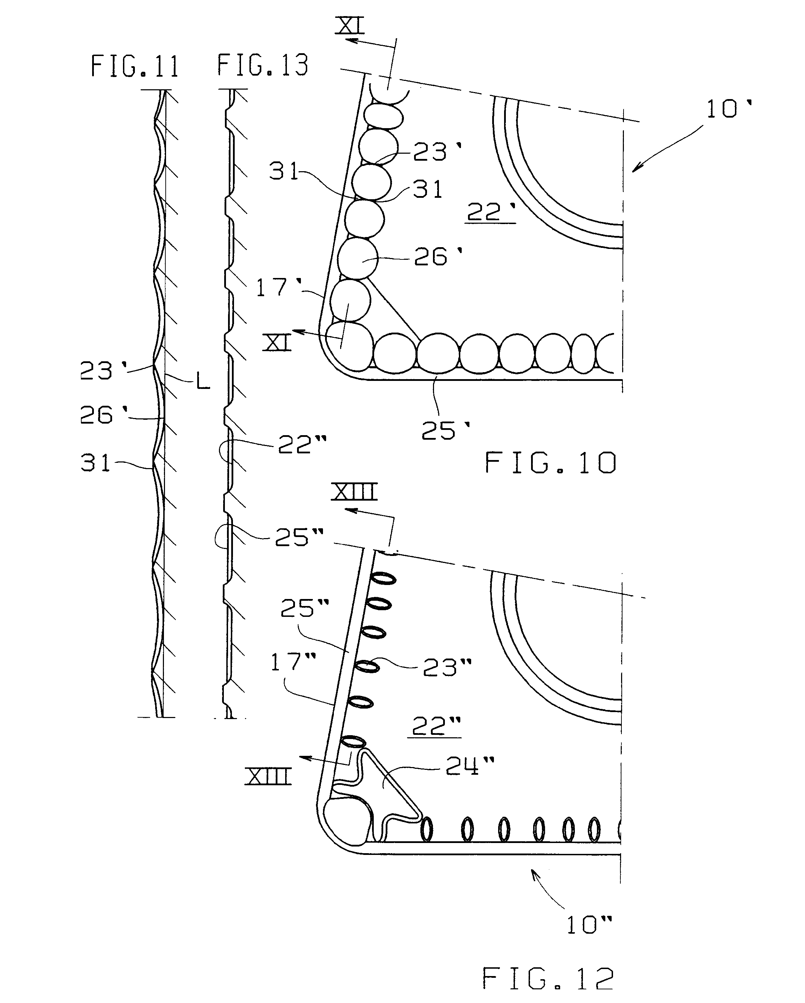

In Figs. 1 - 9 is shown a cutting insert 10 according to one embodiment of the present invention. The insert is made of hard material such as ceramics, cemented carbide or similar material. When selecting ceramics it is advisable to provide a negative strengthening land. The insert has a polygonal basic shape, in this case rhombic basic shape.

The insert comprises an upper face 11 and a lower face 12 which are mainly identical in shape. These faces 11 and 12 are connected by mainly continuous side surfaces 13 to 16 located between them. Cutting edges 17 to 20 are created by the peripheral transitions between the upper face 11 and the side surfaces and between the lower face 12 and the side surfaces, respectively. The side surfaces 13-16 intersect along rounded cutting corners 21. The cutting corner 21 is defined by a bisector **B**. Each upper and lower face has a lower centrally depressed portion 22 which is inclined downwards and inwards from ridges or chip faces 23 and from their corner areas 24. The portion 22 is, during normal turning conditions, not intended to be a rake face or contact face for the chip during its formation. Each said ridge 23 extends in a direction mainly perpendicularly towards the side surfaces 13-16 and is intended to upset the chips during working. Each corner portion 24 is intended, in a passive situation, to be in abutment with a bottom support and, in an active situation, like the ridges 23 contributes to chip upsetting. The ridges and the corner portions could alternatively be located in the same plane. The ridge 23 and the corner portion 24 are connected to the cutting edges 17 directly or indirectly via a negative bevelled face 25 which extends around the insert. The corner portions 24 are symmetrically arranged in relation to the bisector **B** of the adjacent cutting corner 21.

The extension of the ridges 23, in the length direction of adjacent cutting edge 17-20, is limited by a number of mainly spherically concave depressions 26. The lowest point of each recess in its thickness direction **t** is located lower than the adjacent cutting edge and ridge. The lowest points of the recesses are arranged along a line **L** which is located at a substantially constant distance from the adjacent cutting edge. Each recess could alternatively have a concave shape in only one direction that is parallel with or perpendicualar to the cutting edge. The extension of the ridges perpendicularly towards the adjacent cutting edge is limited by their intersection lines with bevelled face 25 or cutting edge 17-20 and the portion 22. The depressions 26 are designed such that the distance **a** between adjacent ridges decreases from the cutting corner 21 towards the middle portion of the cutting edge. This is accomplished by providing a depression 26A at the middle of the cutting edge 17 (Fig. 8) having a smaller width **a** in the area of the ridge 25 than compared with the adjacent depressions 26B. The width of depressions 26B is smaller than the width of depressions 26C when measured in the length direction of the cutting edge.

The corresponding relations apply to the depressions 26D and 26E. The length of said depressions 26, however, when measured in the lateral direction is identical for all. Each of said recesses is surrounded by a mainly curved limitation line 27. This limitation line 27 represents the intersection line between the depression 26 and the bevelled face 25, the ridge 23 and the portion 22. The line 27 could alternatively include only straight portions or be a combination of straight and curved portions. The depressions 26 are arranged at a constant distance **x** from the edge 17. The distance **x** is about half the width of bevelled face 25 in plane projection. The width of said bevelled face, in projection, is between 0.05 and 2 mm.

Each cutting corner 21 is provided with a depression 28 arranged symmetrically around the bisector **B**. This depression intersects with bevelled face 25 and has an extension inwards from said face and occupies about half of the length of the corner portion 24 along the bisector. The largest width of said depression in a direction perpendicular to said bisector is larger than the width **a** of the depression 26E.

Fig. 9 illustrates the insert 10 while engaged in longitudinal turning with a workpiece 29 whereas the tool holder carrying the insert is not illustrated. When the chip is formed at the cutting edge some portions thereof will at least partially be forced downwards into the depressions 26 whereas intervening chip portions will be subject of chip upsetting when abutting the ridges 23. Therefore a corrugated chip 30 is obtained which easily can be broken and is easily manageable and non-dangerous for the workpiece and the tool. The chip is then allowed to move deeper into the chip former close to the active cutting corner than in the chip former located at a distance from said corner, and the radius of curvature of the chip therefore becomes smallest at the corner such that the chip obtains a conical shape. Thanks to this conical shape said chip will in the corner leave the generated surface of the workpiece very soon thus avoiding occurrence of scratches on the workpiece.

Figs. 10 and 11 illustrate an alternative embodiment of an insert 10' of this invention. With this embodiment the ridges 23' are arranged along intersection lines between adjacent depression 26'. Each said ridge 23' is arranged approximately perpendicularly in relation to the adjacent cutting edge 17'. The ridge 23' is limited by substantially triangular end portions 31 of which the end portion oriented towards the cutting edge is intended to act as a combined support and chip face. The lowest points of said recesses are arranged along a curve or a line **L** which is provided at an approximately constant distance from the adjacent cutting edge. In similarity with the insert described above there is provided a decreasing distance between adjacent ridges seen in a direction towards the middle of the insert. Compared with the insert there is a larger number of depressions and same type of depressions. The insert 10' can be located on a bottom support along its entire periphery or it can be supported only at the corner areas. Preferably said insert 10' is provided with a bevelled face 25' that extends all around the insert, said bevelled face extending at least from the adjacent cutting edge to the depressions 26'. The insert 10' will in usage produce corrugated or conical chips in similarity with insert 10.

Another alternative embodiment of the insert 10″ is illustrated in Figs. 12 and 13. This insert is provided with a number of elongated ridges 23″ which extend in a direction mainly perpendicular from the cutting edge 17″ or bevelled face 25″. These ridges are surrounded by a downwards and inwards inclined, plane or concave surface portion 22″. The ridges along the periphery of the insert or only at the cutting corners extend beyond the cutting edge or the bevelled face when seen in the thickness direction of the insert, thus enabling them to act as support surfaces for the insert when located on a bottom support. In the case of providing supporting surfaces only in the cutting corner regions there is provided a single corner portion 24″ which has a relatively large area. The mutual distances between the ridges decrease from the cutting corner and towards the middle of the cutting edge 17″.

The inserts described in the foregoing can be provided with a central aperture for the receipt of a clamping device such as a screw.

The invention thus provides an insert for chip cutting machining which in usage forces the chips in a direction away from the insert and the workpiece and which corrugates the chips to thereby ensuring cutting with good chip control.

## Claims

1. Cutting insert for chip forming machining consisting of a body having polygonal basic shape and having a cutting edge (17-20,17',17″) created at the transition between an upper rake face and a clearance face of the insert (10,10',10″), said upper rake face comprising a chip former spaced from or directly connected to the cutting edge, whereby said chip former includes a plurality of ridges (23,23',23″), **characterized** in that the distance (**a**) between adjacent ridges (23,23',23″) decreases in a direction towards the middle of the cutting edge (17-20,17',17″).

2. Cutting insert as defined in claim 1, **characterized** in that at least a portion of each ridge (23,23',23″) is provided to be a supporting surface for the insert (10,10',10″) when locating it against a bottom support.

3. Cutting insert as defined in claim 1 or 2, **characterized** in that there are surface portions (26,26′,26″) provided on both sides of each ridge (23,23′,23″) in length direction of each adjacent cutting edge (17-20,17′,17″) whereby the lowest point of each said surface portion in direction of thickness (**t**) of the insert is arranged at a lower position than the adjacent cutting edge and ridge.

4. Cutting insert as defined in claim 3, **characterized** in that the lowest points of said surface portions (26,26′) are oriented along a line (L) which is at an approximately constant distance from the adjacent cutting edge (17-20,17′).

5. Cutting insert as defined in any of the claims 1 - 4, **characterized** in that the ridges (23,23′) are separated from each other by means of concave depressions (26,26′) which are linearly oriented along the edge whilst provided at an approximately constant distance inside from the adjacent cutting edge and that each said depression is confined by a limitation line (27) which describes an arcuate curve.

6. Cutting insert as defined in any of the claims 1 - 5, **characterized** in that each ridge (23,23′) is provided as a plane surface intended to act as a combined support and chip face for the insert (10,10′) whereby said plane surface is located next to two adjacent depressions (26,26′), a bevelled face (25,25′) adjacent the cutting edge (17-20,17′) and a downwardly and inwardly inclined surface (22,22′).

7. Cutting insert as defined in claim 6, **characterized** in that each depression (26,26′) is located next to the bevelled face (25,25′) and that one recess (26A) at the middle of the cutting edge (17-20,17′) is smaller than a depression (26B,26C,26D,26E) arranged at a distance from said middle portion.

8. Cutting insert as defined in ay of the claims 1 - 5, **characterized** in that each ridge (23′) is arranged along an intersection line between two adjacent depressions (26′) whereby said ridge is oriented mainly perpendicularly from the adjacent cutting edge (17′) and that said ridge has approximately triangularly shaped end portions (31) intended to act as a combined support and chip face.

9. Cutting insert as defined in any of the claims 1 - 5,

**characterized** in that each ridge (23″) in a direction from its adjacent cutting edge (17″) joins a downwards and inwards inclined surface (22″) and that the ridge is, in the length direction of the adjacent cutting edge, surrounded by downwards and inwards inclined plane or concave portions.

10. Cutting insert as defined in any of the claims 1 - 9, **characterized** in that the insert (10,10′,10″) includes a plurality of corner portions (21) each of which having a recess (28) that is symmetrical in relation to the bisector (**B**) of that corner whereby the limitation line of said recess facing the adjacent cutting edge (17-20,17′,17″) is arranged at a distance from the cutting edge which is shorter than that between the cutting edge and the ridge (23,23′,23″) and that the insert is made of a ceramic material.

**Patentansprüche**

1. Schneideinsatz zum spanabhebenden Bearbeiten, der aus einem Körper besteht mit polygonaler Grundgestalt und eine Schneidkante (17-20, 17′, 17″) hat, die am Übergang zwischen einer oberen Spanfläche und einer Freifläche des Einsatzes (10, 10′, 10″) erzeugt ist, wobei die obere Spanfläche einen Spanbildner aufweist, der von der Schneidkante im Abstand angeordnet oder direkt mit dieser verbunden ist, wobei der Spanbildner eine Mehrzahl von Rippen (23, 23′, 23″) aufweist, <u>dadurch gekennzeichnet</u>, daß der Abstand (a) zwischen benachbarten Rippen (23, 23′, 23″) in einer Richtung zur Mitte der Schneidkante hin (17-20, 17′, 17″) abnimmt.

2. Schneideinsatz nach Anspruch 1, dadurch gekennzeichnet, daß mindestens ein Teil jeder Rippe (23, 23′, 23″) vorgesehen ist, eine Stützoberfläche für den Einsatz (10, 10′, 10″) zu sein, wenn sie gegen eine Bodenhalterung angeordnet ist.

3. Schneideinsatz nach Anspruch 1 oder 2, dadurch gekennzeichnet, daß es Oberflächenteile (26, 26′, 26″) gibt, die auf beiden Seiten jeder Rippe (23, 23′, 23″) in Längsrichtung jeder benachbarten Schneidkante (17-20, 17′, 17″) vorgesehen sind, wodurch der unterste Punkt jedes Oberflächenteils in Richtung der Dicke (t) des Einsatzes an einer niedrigeren Position angeordnet ist als die benachbarte Schneidkante und Rippe.

4. Schneideinsatz nach Anspruch 3, dadurch gekennzeichnet, daß die untersten Punkte der Oberflächenteile (26, 26′) längs einer Linie (L) ausgerichtet sind, die in einem nahezu konstanten Abstand von der benachbarten Schneidkante (17-20, 17′) liegt.

5. Schneideinsatz nach einem der Ansprüche 1 bis 4, dadurch gekennzeichnet, daß die Rippen (23, 23′) mittels konkaver Vertiefungen (26, 26′) voneinander getrennt sind, die geradlinig längs der Kante ausgerichtet sind, während sie im einem nahezu konstanten Abstand innerhalb der benachbarten Schneidkante vorgesehen sind und daß jede Vertiefung durch eine Grenzlinie (27) eingeschlossen ist, die ein gekrümmte Kurve beschreibt.

6. Schneideinsatz nach einem der Ansprüche 1 bis 5, dadurch gekennzeichnet, daß jede Rippe (23, 23′) als ebene Oberfläche vorgesehen ist, die als eine kombinierte Stütze und Spanfläche für den Einsatz (10, 10′) wirken soll, wodurch die ebene Fläche nächst zu zwei benachbarten Vertiefungen (26, 26′), einer abgekanteten Fläche (25, 25′) neben der Schneidkante (17-20, 17) und einer nach unten und einwärts geneigten Oberfläche (22, 22′) angeordnet ist.

7. Schneideinsatz nach Anspruch 6, dadurch gekennzeichnet, daß jede Vertiefung (26, 26′) nächst der abgekanteten Fläche (25, 25′) angeordnet ist und daß eine Ausnehmung (26A) in der Mitte der Schneidkante (17-20,17′) kleiner ist als eine Vertiefung (26B, 26C, 26D, 26E), die in einem Abstand von dem Mittelteil angeordnet ist.

8. Schneideinsatz nach einem der Ansprüche 1 bis 5, dadurch gekennzeichnet, daß jede Rippe (23′) längs einer Schnittlinie zwischen zwei benachbarten Vertiefungen (26′) angeordnet ist, wodurch die Rippe hauptsächlich senkrecht von der benachbarten Schneidkanten (17′) ausgerichtet ist und daß die Rippe nahezu dreieckigförmige Endteile (31) hat, die als kombinierte Stütz- und Spanfläche wirken sollen.

9. Schneideinsatz nach einem der Ansprüche 1 bis 5, dadurch gekennzeichnet, daß jede Rippe (23″) in einer Richtung von ihrer benachbarten Schneidkante (17″) an eine nach unten und einwärts geneigte Oberfläche (22″) ansetzt und daß die Rippe in Längsrichtung der benachbarten Schneidkante von nach unten und einwärts geneigten ebenen oder konkaven Teilen umgeben ist.

10. Schneideinsatz nach einem der Ansprüche 1 bis 9, dadurch gekennzeichnet, daß der Einsatz (10, 10′, 10″) eine Mehrzahl von Eckenteilen (21) aufweist, deren jeder eine Ausnehmung (28) hat, die bezüglich der Winkelhalbierenden (B) jener Ecke symmetrisch ist, wodurch die Begrenzungslinie der Ausnehmung, welche der benachbarten Schneidkante (17-20, 17′, 17″) zugerichtet ist, in einem Abstand von der Schneidkante angeordnet ist, die kürzer ist als die zwischen der Schneidkante und der Rippe (23, 23′, 23″) und daß der Einsatz aus einem Keramikmaterial hergestellt ist.

## Revendications

1. Plaquette de coupe prévue pour un usinage par formation de copeaux consistant en un corps dont la forme de base est polygonale et qui comporte un bord de coupe (17-20, 17′, 17″) créé à la transition entre une face supérieure de coupe orthogonale et une face de dépouille de la plaquette (10, 10′, 10″), ladite face de coupe orthogonale comprenant un dispositif de formation de copeaux espacé du bord de coupe ou directement relié à celui-ci, de sorte que le dit dispositif de formation de copeaux inclut une série de nervures (23, 23′, 23″),
   caractérisée en ce que la distance (a) entre nervures adjacentes (23, 23′, 23″) diminue en direction du milieu du bord de coupe (17-20, 17′, 17″).

2. Plaquette de coupe selon la revendication 1,
   caractérisée en ce qu'au moins une partie de chaque nervure (23, 23′, 23″) est réalisée de façon à former une surface de support pour la plaquette (10, 10′, 10″) lors de son positionnement contre un support inférieur.

3. Plaquette de coupe selon la revendication 1 ou 2,
   caractérisée en ce qu'il existe des parties (26, 26′, 26″) de surfaces prévues sur les deux côtés de chaque nervure (23, 23′, 23″) dans la direction de la longueur de chaque bord de coupe adjacent (17-20, 17′, 17″) grâce à quoi le point le plus bas de chacune desdites parties de surfaces dans la direction de l'épaisseur (t) de la plaquette est situé à une position plus basse que le bord de coupe et la nervure adjacents.

4. Plaquette de coupe selon la revendication 3,
   caratérisée en ce que les points les plus bas desdites parties (26, 26′) de surfaces sont orientés le long d'une ligne (L) qui est située à une distance à peu près constante de bord de coupe (17-20, 17′).

5. Plaquette de coupe selon l'une quelconque des revendications 1 à 4,
   caractérisée en ce que les nervures (23, 23′) sont séparées l'une de l'autre au moyen de dépressions concaves (26, 26') qui sont orientées de façon linéaire le long du bord tout en étant ménagées à une distance à peu près constante, vers l'intérieur, du bord de coupe adjacent et que ladite dépression est confinée par une ligne de limitation (27) qui décrit une courbe en arc.

6. Plaquette de coupe selon l'une quelconque des revendications 1 à 5,

   **caractérisée** en ce que chaque nervure (23, 23') est réalisée sous forme de surface plane prévue pour agir en tant que combinaison de face de support et de face de copeau pour la plaquette (10, 10') de sorte que ladite surface plane est située près des deux dépressions (26, 26'), d'une face chanfreinée (25, 25') adjacente au bord de coupe (17-20, 17') et d'une surface (22, 22') inclinée vers le bas et vers l'intérieur.

7. Plaquette de coupe selon la revendication 6,

   **caractérisée** en ce que chaque dépression (26, 26') est située près de la face chanfreinée (25, 25') et qu'un évidement (26A) situé au milieu du bord de coupe (17-20, 17') est plus petit qu'une dépression (26B, 26C, 26D, 26E) située à distance de ladite partie médiane.

8. Plaquette de coupe selon l'une quelconque des revendications 1 à 5,

   **caractérisée** en ce que chaque nervure (23') est située le long d'une ligne d'intersection entre deux dépressions adjacentes (26'), grâce à quoi ladite nervure est orientée de manière sensiblement perpendiculaire au bord de coupe adjacent (17') et que des parties d'extrémités (31) de ladite nervure, prévues pour agir en tant que combinaison de face de support et de face de copeaux, sont d'une forme à peu près triangulaire.

9. Plaquette de coupe selon l'une quelconque des revendications 1 à 5,

   **caractérisée** en ce que chaque nervure (23″) rejoint, dans une direction partant de son bord de coupe adjacent incliné (17″), une surface (22″) inclinée vers le bas et vers l'intérieur et que la nervure est entourée, dans la direction de la longueur du bord de coupe adjacent incliné, par un plan incliné vers le bas et vers l'intérieur ou par des parties concaves.

10. Plaquette de coupe selon l'une quelconque des revendications 1 à 9,

    **caractérisée** en ce que la plaquette (10, 10', 10″) comprend une série de parties (21) de coins comportant chacune un évidement (28) qui est symétrique par rapport au bissecteur (B) de ce coin, grâce à quoi la ligne de limitation dudit évidement tournée vers le bord de coupe adjacent (17-20, 17', 17″) est située à une distance du bord de coupe qui est plus petite que la distance entre le bord de coupe et la nervure (23, 23', 23″) et que la plaquette est en une matière céramique.

FIG.1

FIG.2

EP 0 360 774 B1

**23** **26A** **26B 26C** **26D** **26E** **28**

L

FIG.3

22 23

26A

FIG.4

22 24 28 25

FIG.5

23 26E

FIG.6

22 23

FIG.7

FIG.8

29

30

26

23

10

FIG.9

30

30

FIG.11    FIG.13

XI

FIG.10

FIG.12